(19)

**Europäisches Patentamt**
**European Patent Office**
**Office européen des brevets**

(11) **EP 4 764 644 A1**

(12) **EUROPEAN PATENT APPLICATION**

(43) Date of publication:
**24.06.2026   Bulletin 2026/26**

(21) Application number: **25215356.4**

(22) Date of filing: **12.11.2025**

(51) International Patent Classification (IPC):
**G02B 9/64** *(2006.01)*      **G02B 13/16** *(2006.01)*
**G02B 15/14** *(2006.01)*

(52) Cooperative Patent Classification (CPC):
**G02B 13/16; G02B 9/64; G02B 15/1425**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **18.12.2024   CN 202411869948**

(71) Applicant: **XGIMI Technology Co., Ltd.
Chengdu, Sichuan 610000 (CN)**

(72) Inventors:
• **LIANG, Xiao
Sichuan, 610000 (CN)**
• **GE, Rui
Sichuan, 610000 (CN)**
• **CHENG, Xiao
Sichuan, 610000 (CN)**
• **LI, Mingliang
Sichuan, 610000 (CN)**
• **LI, Zhiwu
Sichuan, 610000 (CN)**

(74) Representative: **Grey, Ian Michael
Venner Shipley LLP
TIDE Bankside
8 Emerson Street
London SE1 9DU (GB)**

(54) **PROJECTION LENS, PROJECTION SYSTEM, AND PROJECTION APPARATUS**

(57)    The present application discloses a projection lens, a projection system, and a projection apparatus. The projection lens includes a first lens group (G1), a diaphragm (S), and a second lens group (G2); the first lens group includes a first lens (L1), a second lens (L2), a third lens (L3), a fourth lens (L4), and a fifth lens (L5), the first lens has a negative refractive power, the second lens has a positive refractive power, the third lens has a negative refractive power, the fourth lens has a negative refractive power, and the fifth lens has a positive refractive power; the second lens group (G2) includes a sixth lens (L6), a seventh lens (L7), an eighth lens (L8), a ninth lens (L9), and a tenth lens (L10), the sixth lens has a positive refractive power, the seventh lens has a negative refractive power, the eighth lens has a positive refractive power, the ninth lens has a positive refractive power, and the tenth lens has a positive refractive power; and the projection lens satisfies at least one of following conditions: 8 mm ≤ $L_{MAX}$/Fno ≤ 30 mm; or 2 mm ≤ EFL/Fno ≤ 16 mm; or each of the lenses of the projection lens is an all-glass spherical lens. The projection lens according to the present application has improved performance while its size is small.

Fig. 1

EP 4 764 644 A1

**Description**

**TECHNICAL FIELD**

The present application relates to the field of projection imaging, and in particular, to a projection lens, a projection system, and a projection apparatus.

**BACKGROUND**

As projectors are more and more widely used in various fields, the projection lens determines imaging quality of the projectors, and the design of the projection lens has been constantly improved and optimized. At present, the volume of the projector needs to be miniaturized, the structure of the projection lens needs to be more compact, and the size to be smaller. Therefore, certain challenges are brought to performance of the projection lens, and performance of the existing projection lens needs to be improved.

**SUMMARY**

Embodiments of the present application provide a projection lens, a projection system, and a projection apparatus, so that performance of the projection lens can be improved.

In a first aspect, embodiments of the present application provide a projection lens, the projection lens includes a first lens group having a negative refractive power, a diaphragm, and a second lens group having a positive refractive power in sequence along an optical axis from a zoom-in side to a zoom-out side; the first lens group includes a first lens, a second lens, a third lens, a fourth lens, and a fifth lens which are disposed in sequence along the optical axis from the zoom-in side to the zoom-out side, the first lens has a negative refractive power, the second lens has a positive refractive power, the third lens has a negative refractive power, the fourth lens has a negative refractive power, and the fifth lens has a positive refractive power; the second lens group includes a sixth lens, a seventh lens, an eighth lens, a ninth lens, and a tenth lens which are disposed in sequence along the optical axis from the zoom-in side to the zoom-out side, the sixth lens has a positive refractive power, the seventh lens has a negative refractive power, the eighth lens has a positive refractive power, the ninth lens has a positive refractive power, and the tenth lens has a positive refractive power; a focal length of the projection lens is EFL, a f-number of the projection lens is Fno, an outer diameter of a largest one of the lenses of the projection lens is $L_{MAX}$, and the projection lens satisfies at least one of following conditions: 8 mm $\leq L_{MAX}$/Fno $\leq$ 30 mm; 2 mm $\leq$ EFL/Fno $\leq$ 16 mm; or each of the lenses of the projection lens is an all-glass spherical lens.

According to the embodiments of the first aspect of the present application, the first lens group further includes an eleventh lens, the eleventh lens is disposed between the second lens and the third lens, the eleventh lens has a negative refractive power, or the eleventh lens has a positive refractive power; and/or the second lens group further includes a twelfth lens, the twelfth lens is disposed between the eighth lens and the ninth lens, and the twelfth lens has a positive refractive power.

According to any one of the previous embodiments of the first aspect of the present application, the first lens is a plastic aspheric lens; and/or at least one of the ninth lens, the tenth lens, or the twelfth lens is a glass aspheric lens.

According to any one of the previous embodiments of the first aspect of the present application, the fourth lens and the fifth lens form a cemented doublet-lens set having a positive refractive power; and/or the sixth lens, the seventh lens, and the eighth lens form a cemented triplet-lens set having a negative refractive power.

According to any one of the previous embodiments of the first aspect of the present application, the fourth lens is a biconcave negative lens, and the fifth lens is a biconvex positive lens; and/or the sixth lens is a biconvex positive lens or a meniscus positive lens, the seventh lens is a biconcave negative lens, and the eighth lens is a biconvex positive lens.

According to any one of the previous embodiments of the first aspect of the present application, an absolute value of a difference between a refractive index of the fourth lens and a refractive index of the fifth lens is greater than 0.2; and/or the absolute value of the difference between the refractive indexes of any adjacent two of the sixth lens, the seventh lens, and the eighth lens is greater than 0.2.

According to any one of the previous embodiments of the first aspect of the present application, a back focal length of the projection lens is BFL, a total optical length of the projection lens is TTL, an image plane height of the projection lens is H, and at least one of following conditions is satisfied: 0.2 $\leq$ BFL/EFL $\leq$ 3; BFL/TTL $\geq$ 0. 1; 5 $\leq$ TTL/H $\leq$ 30; or 1 $\leq$ EFL/H $\leq$ 3.

According to any one of the previous embodiments of the first aspect of the present application, a focal length of the first lens group is $EFL_{ZOOM1}$, a focal length of the second lens group is $EFL_{ZOOM2}$, and following conditions are satisfied: -100.0 < $EFL_{ZOOM1}$/EFL <-20.0; and 0.3 < $EFL_{ZOOM2}$/EFL < 2.6.

According to any one of the previous embodiments of the first aspect of the present application, the back focal length of the projection lens is BFL, the total optical length of the projection lens is TTL, and the projection lens satisfies at least one of following conditions: 9 mm ≤ EFL ≤ 20 mm; TTL ≤ 180 mm; BFL ≥ 20 mm; 1.5 ≤ Fno ≤ 3; or a diameter of each of the lenses is not greater than 60 mm.

According to any one of the previous embodiments of the first aspect of the present application, at least two lenses of the first lens group each have a refractive index greater than 1.8; and/or at least two lenses of the second lens group each have a refractive index greater than 1.8; and/or the second lens group includes X lenses whose ratio of a refractive index temperature coefficient to the focal length is a negative value, and a following condition is satisfied: 2 ≤ X ≤ 4.

In a second aspect, the present application further provides a projection system including the projection lens according to any one of the embodiments of the first aspect.

In a third aspect, the present application further provides a projection apparatus including the projection lens according to any one of the embodiments of the first aspect or the projection system according to the second aspect.

In the projection lens according to the present application, the projection lens includes the first lens group, a diaphragm, and a second lens group. The positive and negative refractive powers of the lenses in the first lens group and the second lens group are properly set, so that the structure of the projection lens is precise, so as to achieve the purposes of low cost, compactness, and small volume. The ratio of the focal length EFL to the f-number Fno of the projection lens is limited to be within [2mm, 16mm], so that the projection lens has the large aperture, and the projection lens can have a relatively large light transmission opening to receive a relatively great number of light rays, increase the brightness of the light ray projected by the projection lens, and improve the performance of the projection lens. The ratio of the outer diameter $L_{MAX}$ of the largest lens to the f-number Fno of the projection lens is limited to be within [8 mm, 30 mm], so that under a condition that the $L_{MAX}$ is constant, the projection lens has the relatively large aperture, and the performance of the projection lens may be improved. Under a condition that Fno is within a certain range, the outer diameter of the largest lens is limited accordingly, so that the small-size design of the small-size projection lens can be achieved to reduce the space occupied. The all-glass spherical lens is used in each of the lenses of the projection lens, which may effectively reduce the cost and processing difficulty of the projection lens, and improve the applicability of the projection lens. In the present application, the performance of the projection lens is improved.

## BRIEF DESCRIPTION OF THE DRAWINGS

Other features, objects, and advantages of the present application will become more apparent from reading the following detailed description of the non-limiting embodiments with reference to the drawings, in which the same or similar reference numerals represent the same or similar features.

Fig. 1 is a schematic structural view of a projection lens according to embodiments of a first aspect of the present application;

Fig. 2 is a schematic structural view of another projection lens according to embodiments of a first aspect of the present application;

Fig. 3 is a schematic structural view of yet another projection lens according to embodiments of a first aspect of the present application; and

Fig. 4 is a schematic structural view of yet another projection lens according to embodiments of a first aspect of the present application.

Reference signs:

G1: First lens group; S: Diaphragm; G2: Second lens group; P: Prism; CG: Protective glass; DMD: Digital micromirror device; SCR: Projection screen; and

L1: First lens; L2: Second lens; L3: Third lens; L4: Fourth lens; L5: Fifth lens; L6: Sixth lens; L7: Seventh lens; L8: Eighth lens; L9: Ninth lens; L10: Tenth lens; L11: Eleventh lens; and L12: Twelfth lens.

## DETAILED DESCRIPTION

Features and exemplary embodiments of various aspects of the present application will be described in detail below. In the following detailed description, numerous specific details are set forth in order to provide a thorough understanding of the present application. However, it will be apparent to those skilled in the art that the present application may be implemented without some of these specific details. The following description of the embodiments is merely for the purpose of providing a better understanding of the present application by illustrating examples of the present application. In the drawings and the following description, at least a part of the well-known structures and techniques are not shown in order to avoid unnecessary ambiguity of the present application. In addition, the dimensions of some structures may be enlarged for clarity. Further, the features, structures, or characteristics described below may be combined in one or more embodiments in any suitable manner.

In the description of the present application, it should be noted that, unless otherwise specified, the term "a plurality of" indicates two or more; the terms "upper", "lower", "left", "right", "inner", "outer", and the like indicate orientations or positional relationships for facilitating the description of the present application and simplifying the description, and do not indicate or imply that the involved devices or elements must have such a particular orientation, or must be constructed and operated in such a particular orientation, and thus should not be construed to limit the present application. In addition, the terms such as "first" and "second" are for descriptive purposes only, and cannot be understood as indicating or implying relative importance. Moreover, the terms "comprise", "include", or any other variants thereof, are intended to represent a non-exclusive inclusion, so that a process, method, article or device including a series of elements includes not only those elements, but also other elements that are not explicitly listed or elements inherent to such a process, method, article or device. Without more constraints, the elements following an expression "comprise/include..." do not exclude the existence of additional identical elements in the process, method, article or device that includes the elements.

The directional words appearing in the following description indicate directions shown in the drawings and do not limit the specific structures in the embodiments of the present application. In the description of the present application, it should be further noted that, unless otherwise clearly specified and limited, the terms "installation" and "connection" should be understood in a broad sense, for example, the "connection" may refer to a fixed, a detachable or an integrated connection; and it may refer to a director an indirect connection. For a person skilled in the art, the specific meaning of the above terms in the present application may be understood in accordance with specific situations.

As projectors are more and more widely used in various fields, the projection lens determines imaging quality of the projectors, and the design of the projection lens has been constantly improved and optimized. At present, the volume of the projector needs to be miniaturized, the structure of the projection lens needs to be more compact, and the size needs to be smaller. Therefore, certain challenges are brought to performance of the projection lens. Accordingly, the performance of the projection lens needs to be ensured, and the cost of the projection lens can be reduced while the small size is achieved.

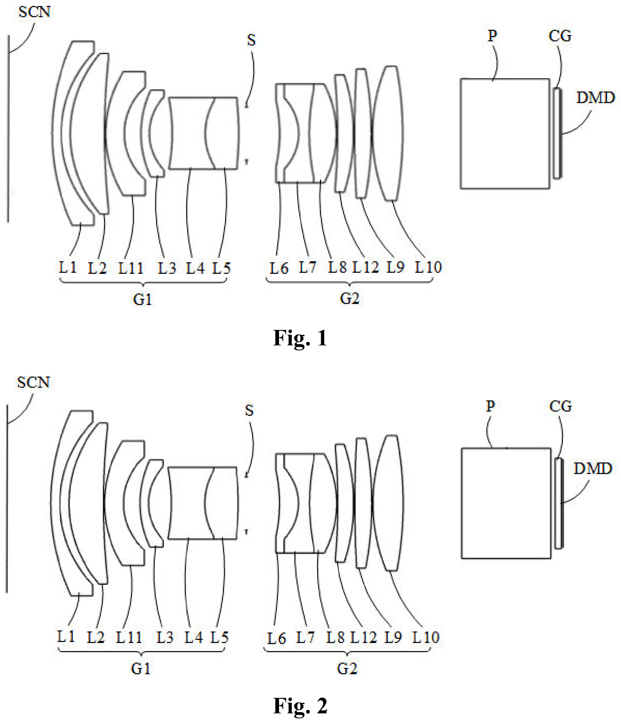

In order to solve the above technical problems, the present application is set forth. In order to better understand the present application, a projection lens, a projection system, and a projection apparatus according to embodiments of the present application will be described in detail below with reference to Fig. 1 to Fig. 4.

The projection lens according to the embodiments of the present application may be a projection lens of a projector. Optionally, the projection lens may be a projection lens of a laser projector. The laser projector has the features of high image contrast ratio, clear imaging, bright color, and higher brightness. Optionally, the projection lens according to the embodiments of the present application may also be applied to a light emitting diode (LED) projector, a liquid crystal display (LCD) projector, and the like. The projection lens according to the embodiments of the present application is not limited to be used in a projector. Under a condition that the projection lens according to the present application is applied to other devices, it should also fall within the protection scope of the present application.

The projection lens according to the embodiments of the present application may be applied to the fixed-focus projection lens of the projector, and the fixed-focus projection lens further includes the prism P, the protective glass CG, and the digital micromirror device DMD chip. The first lens group G1, the diaphragm S, the second lens group G2, the prism P, the protective glass CG, and the digital micromirror device DMD are disposed along the optical axis from the zoom-in side to the zoom-out side. During the projection, the light ray enters the projection lens from the DMD image plane side through the prism P, and finally leaves the projection lens to cast onto the projection screen SCR to obtain the projection imaging effect. Exemplarily, the projection lens may be applied to a vehicle-mounted projection system or a vehicle-mounted projection apparatus.

Referring to Fig. 1, Fig. 1 is a schematic structural view of a projection lens according to embodiments of a first aspect of the present application.

As shown in Fig. 1, embodiments of the first aspect of the present application provide a projection lens. The projection lens includes the first lens group G1 having the negative refractive power, the diaphragm S, and the second lens group G2 having the positive refractive power in sequence along the optical axis from the zoom-in side to the zoom-out side; the first lens group G1 includes the first lens L1, the second lens L2, the third lens L3, the fourth lens L4, and the fifth lens L5 which are disposed in sequence along the optical axis from the zoom-in side to the zoom-out side, the first lens L1 has the negative refractive power, the second lens L2 has the positive refractive power, the third lens L3 has the negative refractive power, the fourth lens L4 has the negative refractive power, and the fifth lens L5 has the positive refractive power; the second lens group G2 includes the sixth lens L6, the seventh lens L7, the eighth lens L8, the ninth lens L9, and the tenth lens L10 which are disposed in sequence along the optical axis from the zoom-in side to the zoom-out side, the sixth lens L6 has the positive refractive power, the seventh lens L7 has the negative refractive power, the eighth lens L8 has the positive refractive power, the ninth lens L9 has the positive refractive power, and the tenth lens L10 has the positive refractive power; the focal length of the projection lens is EFL, the f-number of the projection lens is Fno, the outer diameter of the largest lens of the projection lens is $L_{MAX}$, and the projection lens satisfies at least one of the following conditions: 8 mm ≤ $L_{MAX}$/Fno ≤ 30 mm; 2 mm ≤ EFL/Fno ≤ 16 mm; or each of the lenses of the projection lens is an all-glass spherical lens.

In the embodiments of the present application, the zoom-in side refers to a side of the projection lens close to the projection screen SCR under a condition that the projection lens is applied to the projection system or the projection apparatus, and the zoom-out side refers to a side of the projection lens close to the DMD chip.

Optionally, the projection lens satisfies the following condition: 8 mm ≤ $L_{MAX}$/Fno ≤ 30 mm; 2 mm ≤ EFL/Fno ≤ 16 mm; and each of the lenses of the projection lens is the all-glass spherical lens.

The outer diameter of the lens may be understood as the length of the outer diameter of a circular object, that is, the greatest linear distance from one edge of the lens to the other edge of the lens. The outer diameter of the lens may also be understood as the diameter of the lens.

Exemplarily, the ratio of $L_{MAX}$/Fno may be 30 mm, 28 mm, 26 mm, 24 mm, 20 mm, 18 mm, 16 mm, 12 mm, 8 mm, and the like. Of course, the ratio of $L_{MAX}$/Fno may be in any combined range of the above values. Optionally, the lens of the projection lens having the largest size may be the first lens L1.

Exemplarily, the ratio of EFL/Fno may be 16 mm, 15 mm, 14 mm, 12 mm, 10 mm, 8 mm, 6 mm, 4 mm, 2 mm, and the like. Of course, the ratio of EFL/Fno may be in any combined range of the above values.

Optionally, the diaphragm S is a variable aperture diaphragm, and the aperture diameter may be continuously adjusted. The aperture diameter of the diaphragm S is adjusted, so that the brightness of the projection lens may be changed to achieve applications in different scenarios. For example, under a condition that the high brightness is required, the aperture diameter of the diaphragm S may be adjusted to be the maximum, and under the relatively dark environment, the aperture diameter of the diaphragm S may be adjusted to be small. Optionally, the air gap T1 between the diaphragm S and the sixth lens L6 is greater than 4 mm, which may effectively ensure the space required for the variable diaphragm structure.

The Fno parameter is a parameter characterizing the light transmission capacity of the lens, and Fno = the focal length EFL/the aperture diameter of the projection lens. Under a condition that the focal length of the lens remains unchanged, the greater the aperture diameter, the smaller the value of Fno, the stronger the light transmission ability of the lens, and the higher the brightness. The projection lens of this embodiment may increase the relative aperture diameter of the diaphragm S, so that the large aperture is achieved, the light transmission amount is increased, and the brightness is increased.

The all-glass spherical lens refers to a lens which has a spherical front surface and a spherical back surface, or has one spherical surface and one planar surface, and is entirely made of glass material. The radii of curvature of the spherical lens along all directions are equal to each other, so that the optical power of the spherical lens along all directions is equal to each other.

The first lens group G1, the diaphragm S, and the second lens group G2 according to the embodiments of the present application are disposed in sequence along the optical axis from the zoom-in side to the zoom-out side, and during the projection, from the light source, the light ray passes through the second lens group G2, the diaphragm S, and the first lens group G1 in sequence from the image plane side, and is finally projected onto the projection screen SCR. The projection lens includes at least ten lenses. The positive and negative refractive powers of the lenses in the first lens group G1 and the second lens group G2 are properly set, so that the structure of the projection lens is precise, so as to achieve the purposes of low cost, compactness, and small volume.

In the projection lens according to the embodiments of the present application, the projection lens includes the first lens group G1, the diaphragm S, and the second lens group G2, and the diaphragm S can be used for converging the front and back light rays, which is beneficial for reducing the total length of the projection lens.

The first lens group G1 serves the function of collecting the light ray and correcting distortions and other off-axis aberration. The second lens group G2 serves the function of controlling the image-side telecentric angle and correcting chromatic aberration and other off-axis aberration. The first lens group G1 has the ability to correct distortions, which is beneficial for increasing the field of view of the system. Therefore, the first lens group G1 may well correct the off-axis aberration such as distortion, coma, curvature of field, and astigmatism, ensure the incident angle between the light ray and the surface of the lens to be relatively gentle, and does not produce significant high-order aberration while having a large field of view. Properly setting the refractive powers of the lenses beneficial for ensuring the smooth transition of the light ray and the stability of imaging.

The ratio of the focal length EFL to the f-number Fno of the projection lens is limited to be within [2mm, 16mm], so that the projection lens has the large aperture, and the projection lens can have a relatively large light transmission opening to receive a relatively great number of light rays, increase the brightness of the light ray projected by the projection lens, and improve the performance of the projection lens.

The ratio of the outer diameter $L_{MAX}$ of the largest lens to the f-number Fno of the projection lens is limited to be within [8 mm, 30 mm], so that under a condition that the $L_{MAX}$ is constant, the projection lens has the relatively large aperture, and the performance of the projection lens may be improved.

Under a condition that Fno is within a certain range, the outer diameter of the largest lens is limited accordingly, so that the small-size design of the small-size projection lens can be achieved to reduce the space occupied. The all-glass spherical lens is used in each of the lenses of the projection lens, which may effectively reduce the cost and processing difficulty of the projection lens, and improve the applicability of the projection lens. In summary, the performance of the projection lens can be improved by the embodiments of the present application.

It should be noted that, in the embodiments of the present application, a part of the all-glass spherical lenses may be replaced with another type of lens. Optionally, the first lens L1 may be replaced with a plastic aspheric lens. Optionally, one or more all-glass spherical lenses of the ninth lens L9, the tenth lens L10, and the twelfth lens L12 may be replaced with the glass aspherical lenses. The cost and processing difficulty of the projection lens can also be reduced by this embodiment.

In the projection lens according to the embodiments of the present application, the parameters of the lenses are set to improve the performance of the modulation transfer function (MTF), so that the lenses have the desired imaging quality, and the system distortion is reduced.

Under a condition that the radius of curvature of the zoom-in side surface of the lens is defined to be a positive value, the zoom-in side surface of the lens is a convex, and under a condition that the radius of curvature of the zoom-in side surface of the lens is defined to be a negative value, the zoom-in side surface of the lens is a concave; under a condition that the radius of curvature of the zoom-out side surface of the lens is defined to be a negative value, the zoom-out side surface of the lens is a convex, and under a condition that the radius of curvature of the zoom-out side surface of the lens is defined to be a positive value, the zoom-out side surface of the lens is a concave; under a condition that the radius of curvature of the zoom-in side surface of the lens is defined to be $\pm\infty$, the zoom-in side surface of the lens is a plane; under a condition that the radius of curvature of the zoom-out side surface of the lens is defined to be $\pm\infty$, the zoom-out side surface of the lens is a plane.

In some embodiments, the first lens group G1 further includes the eleventh lens L11, the eleventh lens L11 is disposed between the second lens L2 and the third lens L3, the eleventh lens L11 has the negative refractive power, or the eleventh lens L11 has the positive refractive power. The curvature and the thickness of the eleventh lens L11 are properly set, so that the off-axis aberration and the system distortion may be effectively corrected, and the MTF performance may be improved.

Specifically, the eleventh lens L11 may be a meniscus positive lens or a meniscus negative lens, the zoom-in side surface of the eleventh lens L11 is a convex, and the zoom-out side surface of the eleventh lens L11 is a concave. The radius of curvature of the surface of the eleventh lens L11 close to the zoom-in side may be set to be 10 mm to 40 mm, and the radius of curvature of the surface of the eleventh lens L11 close to the zoom-out side may be set to be 8 mm to 80 mm.

In some embodiments, the second lens group G2 further includes the twelfth lens L12, the twelfth lens L12 is disposed between the eighth lens L8 and the ninth lens L9, and the twelfth lens L12 has the positive refractive power. The curvature and the thickness of the twelfth lens L12 are properly set, so that the off-axis aberration and the system distortion may be effectively corrected, and the MTF performance may be improved.

Specifically, the twelfth lens L12 may be a meniscus positive lens, the zoom-in side surface of the twelfth lens L12 is a concave, the zoom-out side surface of the twelfth lens L12 is a convex, the radius of curvature of the surface of the twelfth lens L12 close to the zoom-in side is - 40 mm to - 180 mm, and the radius of curvature of the surface of the twelfth lens L12 close to the zoom-out side is - 20 mm to - 40 mm.

In some embodiments, the fourth lens L4 and the fifth lens L5 form the cemented doublet-lens set having the positive refractive power.

In some embodiments, the sixth lens L6, the seventh lens L7, and the eighth lens L8 from the cemented triplet-lens set having the negative refractive power.

The cemented doublet-lens set refers to a lens set formed by cementing two lenses; and the cemented triplet-lens set refers to a lens set formed by cementing three lenses, and the cemented surfaces of adjacent two lenses are bonded to each other.

In these embodiments, two lenses of the fourth lens L4 and the fifth lens L5 are cemented, and three lenses of the sixth lens L6, the seventh lens L7, and the eighth lens L8 are cemented to form the cemented lenses, which is beneficial for correcting the chromatic aberration, reducing the air spacing between the lenses, and reducing the total optical length of the overall system.

In addition, in the embodiments of the present application, only one set of cemented doublet-lens set and one set of cemented triplet-lens set may be provided, reducing the cost of the projection lens.

In some embodiments, the fourth lens L4 is a biconcave negative lens, and the fifth lens L5 is a biconvex positive lens. The zoom-in side surface of the fourth lens L4 is a concave, and the zoom-out side surface of the fourth lens L4 is a concave. The zoom-in side surface of the fifth lens L5 is a convex, and the zoom-out side surface of the fifth lens L5 is a convex. The radius of curvature of the surface of the fourth lens L4 close to the zoom-in side is -15 mm to -48 mm, and the radius of curvature of the surface of the fourth lens L4 close to the zoom-out side is 5 mm to 20 mm. The radius of curvature of the surface of the fifth lens L5 close to the zoom-in side is 5 mm to 20 mm, and the radius of curvature of the surface of the fifth lens L5 close to the zoom-out side is -20 mm to -80 mm.

In some embodiments, the sixth lens L6 is a biconvex positive lens or a meniscus positive lens, the seventh lens L7 is a biconcave negative lens, and the eighth lens L8 is a biconvex positive lens. The zoom-in side surface of the sixth lens L6 may be a concave or a convex, and the zoom-out side surface of the sixth lens L6 is a convex; under a condition that the zoom-in side surface of the sixth lens L6 is a concave, the sixth lens L6 is a meniscus positive lens, and under a condition that the zoom-in side surface of the sixth lens L6 is a convex, the sixth lens L6 is a biconvex positive lens. The zoom-in side surface of the seventh lens L7 is a concave, and the zoom-out side surface of the seventh lens L7 is a concave. The zoom-in side surface of the eighth lens L8 is a convex, and the zoom-out side surface of the eighth lens L8 is a convex. In the embodiments of the present application, the example in which the sixth lens L6 is a meniscus positive lens is given for illustration. The radius of curvature of the surface of the sixth lens L6 close to the zoom-in side is - 15 mm to - 40 mm, and the radius of curvature of the surface of the sixth lens L6 close to the zoom-out side is - 7 mm to - 30 mm. The radius of curvature of the surface of the seventh lens L7 close to the zoom-in side is - 7 mm to - 30 mm, and the radius of curvature of the surface of the seventh lens L7 close to the zoom-out side is 25 mm to 50 mm. The radius of curvature of the surface of the eighth lens L8 close to the zoom-in side is 25 mm to 50 mm, and the radius of curvature of the surface of the eighth lens L8 close to the zoom-out side is - 10 mm to - 40 mm.

In these embodiments, the concave and convex shapes of the surfaces of the lenses are properly set, so that the optical lens can have the relatively small aberration, the relatively good light utilization rate, and the relatively high resolution.

In some embodiments, the first lens L1 may be a meniscus negative lens, and the radius of curvature of the surface of the first lens L1 close to the zoom-in side is 30 mm to 60 mm, and the radius of curvature of the surface of the first lens L1 close to the zoom-out side is 10 mm to 35 mm. The second lens L2 may be a meniscus positive lens, the radius of curvature of the surface of the second lens L2 close to the zoom-in side is 15 mm to 40 mm, and the radius of curvature of the surface of the second lens L2 close to the zoom-out side is 60 mm to ∞. The third lens L3 may be a meniscus negative lens, the radius of curvature of the surface of the third lens L3 close to the zoom-in side is 10 mm to 50 mm, and the radius of curvature of the surface of the third lens L3 close to the zoom-out side is 5 mm to 20 mm. The ninth lens L9 may be a biconvex positive lens, the radius of curvature of the surface of the ninth lens L9 close to the zoom-in side is 150 mm to ∞, and the radius of curvature of the surface of the ninth lens L9 close to the zoom-out side is - 80 mm to - 20 mm. The tenth lens L10 may be a biconvex positive lens, the radius of curvature of the surface of the tenth lens L10 close to the zoom-in side is 15 mm to 60 mm, and the radius of curvature of the surface of the tenth lens L10 close to the zoom-out side is - 120 mm to - 40 mm.

In some embodiments, the absolute value of the difference between the refractive index of the fourth lens L4 and the refractive index of the fifth lens L5 is greater than 0.2.

In some embodiments, the absolute value of the difference between the refractive indexes of any adjacent two of the sixth lens L6, the seventh lens L7, and the eighth lens L8 is greater than 0.2.

In these embodiments, in the cemented lens set, the cooperation and the combination of the refractive powers and the refractive indexes of a plurality of lenses may effectively correct the chromatic aberration of the system, and the positive and negative spherical aberrations of the cemented lens set cancel each other out, so that the overall spherical aberration of the projection lens is corrected. Therefore, the projection lens may ensure the imaging quality, and the structure of the projection lens is simplified.

In some embodiments, the back focal length of the projection lens is BFL, the total optical length of the projection lens is TTL, the image plane height of the projection lens is H, and at least one of the following conditions is satisfied: $0.2 \leq$ BFL/EFL $\leq 3$; BFL/TTL $\geq 0.1$; $5 \leq$ TTL/H $\leq 30$; or $1 \leq$ EFL/H $\leq 3$.

In the embodiments of the present application, the back focal length of the projection lens may be referred to as the rear focal length; and the focal length of the projection lens may be referred to as the effective focal length. Optionally, the total optical length TTL of the projection lens is the on-axis distance between the zoom-in side surface of the first lens L1 and the DMD chip along the optical axis. The back focal length of the projection lens refers to the distance between the zoom-out side surface of a lens closest to the DMD chip and the DMD chip along the optical axis. Optionally, the back focal length of the projection lens is equal to the distance between the zoom-out side surface of the tenth lens L10 and the DMD chip along the optical axis.

Optionally, the projection lens satisfies the following conditions: $0.2 \leq$ BFL/EFL $\leq 3$; BFL/TTL $\geq 0.1$; $5 \leq$ TTL/H $\leq 30$; and $1 \leq$ EFL/H $\leq 3$. The projection lens has the feature of small lens length while the rear focal length of the projection lens is relatively great, so that the projection apparatus using the projection lens is miniaturized.

Exemplarily, the ratio of BFL/EFL may be 3, 2.8, 2.6, 2.2, 2, 1.8, 1.4, 1, 0.6, 0.2, or the like. Of course, the ratio of BFL/EFL may be in any combined range of the above values. The ratio of BFL/TTL may be 0.1, 0.2, 0.3, 0.4, 0.5, and the like. The ratio of TTL/H may be 5, 10, 15, 20, 25, 30, and the like. The ratio of EFL/H may be 1, 1.2, 1.6, 1.8, 2, 2.4, 2.8, 3, and the like.

In some embodiments, the focal length of the first lens group G1 is $EFL_{ZOOM1}$, the focal length of the second lens group G2 is $EFL_{ZOOM2}$, and the following conditions are satisfied: $-100.0 < EFL_{ZOOM1}/EFL < -20.0$; and $0.3 < EFL_{ZOOM2}/EFL < 2.6$.

Exemplarily, the ratio of $EFL_{ZOOM1}/EFL$ may be - 95, - 90, - 80, - 70, - 60, - 50, - 40, - 30, - 25, or the like. Of course, the ratio of $EFL_{ZOOM1}/EFL$ may be in any combined range of the above values.

Exemplarily, the ratio of $EFL_{ZOOM2}/EFL$ may be 2.5, 2.4, 2.3, 2.0, 1.8, 1.6, 1.5, 1.2, 1.0, 0.8, 0.5, 0.4, or the like. Of course, the ratio of $EFL_{ZOOM2}/EFL$ may be in any combined range of the above values.

In some embodiments, the projection lens satisfies the following condition: $9 \text{ mm} \leq EFL \leq 20 \text{ mm}$.

Exemplarily, the focal length EFL of the projection lens may be 9 mm, 9.5 mm, 10 mm, 11 mm, 12 mm, 13 mm, 15 mm, 16 mm, 18 mm, 19 mm, 20 mm, or the like. Of course, the focal length EFL of the projection lens may be in any combined range of the above values.

In some embodiments, the projection lens satisfies the following condition: $TTL \leq 180 \text{ mm}$.

Exemplarily, the total optical length TTL of the projection lens may be 180 mm, 179 mm, 178 mm, 177 mm, 176 mm, 175 mm, 174 mm, 173 mm, 172 mm, 171 mm, 170 mm, or the like. Of course, the total optical length TTL of the projection lens may be in any combined range of the above values.

In some embodiments, the projection lens satisfies the following condition: $BFL \geq 20 \text{ mm}$. The BFL may be the distance from the tenth lens L10 of the projection lens to the DMD. The space between the tenth lens L10 and the DMD may be used for placing the prism P, the protective glass CG, and the like.

Exemplarily, the back focal length BFL of the projection lens may be 20 mm, 25 mm, 30 mm, 35 mm, 40 mm, 45 mm, 50 mm, 55 mm, 60 mm, 65 mm, 70 mm, or the like. Of course, the back focal length BFL of the projection lens may be in any combined range of the above values.

In some embodiments, the projection lens satisfies the following condition: $1.5 \leq Fno \leq 3$. The smaller the value of Fno, the stronger the light transmission ability of the lens, and the higher the brightness. The projection lens of this embodiment may increase the relative aperture diameter of the diaphragm, so that the large aperture is achieved, the light transmission amount is increased, and the brightness is increased.

Exemplarily, the f-number Fno of the projection lens may be 1.5, 1.6, 1.8, 2.2, 2.4, 2.6, 2.8, 3.0, or the like. Of course, the f-number Fno of the projection lens may be in any combined range of the above values.

In some embodiments, the diameter of each of the lenses is not greater than 60 mm, which is beneficial for the miniaturization of the projection lens.

Exemplarily, the diameter of each of the lenses may be 60 mm, 55 mm, 45 mm, 40 mm, 38 mm, 36 mm, 35 mm, 34.6 mm, 34.4 mm, 34.2 mm, 34.0 mm, or the like. Of course, the diameter of each of the lenses may be in any combined range of the above values.

In some embodiments, at least two lenses in the first lens group G1 each have the refractive index greater than 1.8. The distortion and the astigmatism of the lens may be corrected, and the sine difference of the lens may be corrected to a certain extent to further improve the imaging quality. Exemplarily, 2, 3, 4, 5, or 6 lenses in the first lens group G1 each have the refractive index greater than 1.8.

In some embodiments, at least two lenses in the second lens group G2 each have the refractive index greater than 1.8. The distortion and the astigmatism of the lens may be corrected, and the sine difference of the lens may be corrected to a certain extent to further improve the imaging quality. Exemplarily, 2, 3, 4, 5, or 6 lenses in the second lens group G2 each have the refractive index greater than 1.8.

In some embodiments, the second lens group G2 includes X lenses whose ratio of the refractive index temperature coefficient Dn/Dt to the focal length EFFL-n is a negative value, that is, $(Dn/Dt)/EFFL\text{-}n < 0$, Dn/Dt is the refractive index temperature coefficient of the lens, and EFFL-n is the focal length of the lens. The following condition is satisfied: $2 \leq X \leq 4$. The lens having the positive refractive power and the negative refractive index temperature coefficient Dn/Dt may compensate for the thermal defocus of the entire projection lens. The lens having the negative refractive power and the positive refractive index temperature coefficient Dn/Dt may also compensate for the thermal defocus of the entire projection lens.

Optionally, X may be 2, 3, or 4. Exemplarily, the ratio of the refractive index temperature coefficient to the focal length of the sixth lens L6 may be a negative value; the ratio of the refractive index temperature coefficient to the focal length of the eighth lens L8 may be a negative value; and the ratio of the refractive index temperature coefficient to the focal length of the tenth lens L10 may be a negative value.

In these embodiments, the projection lens satisfying the above conditions may well serve the function of compensating for the thermal defocus, so that the projection lens does not significantly affect the image quality in a certain temperature change range.

The structure of the projection lens according to the present application is precise, so that the design requirements for the low cost, compactness, and small volume may be satisfied, the volume of the lens is small, and the limitation to the total length and the lens aperture diameter is relatively great, so as to reduce the space occupied. The compact structure can achieve the miniaturization of the projection lens. The projection lens has the high resolution quality and the compact structure, and the cost of the projection lens is controllable. Under a condition that it is applied to vehicles, the projection lens can provide the relatively great structural design freedom to avoid interference with interior decorative parts. The present application is based on the principle of optical imaging, and the repeated optical optimization is carried out on the radius of curvature, material, thickness, air spacing, and two cemented lenses of the lenses of the projection lens using the optical design software, so as to achieve the objectives of small aberration, high resolution, long rear focus, small total length, simple structure, high mass productivity, and convenient mass production.

In the second aspect, the present application further provides a projection system including the projection lens according to any one of the embodiments of the first aspect. Since the projection system of the present application includes the projection lens according to any one of the embodiments of the first aspect, the projection system of the present application has the advantages of the projection lens of the present application.

In the third aspect, the present application further provides a projection apparatus including the projection lens according to any one of the embodiments of the first aspect or the projection system according to the second aspect. Since the projection apparatus of the present application includes the projection lens according to any one of the embodiments of the first aspect or the projection system according to the second aspect, the projection apparatus of the present application has the advantages of the projection lens of the present application.

The technical solutions of the present application will be further described below with reference to the specific embodiments.

Embodiment 1

Referring to Fig. 1, the projection lens of Embodiment 1 includes the first lens L1, the second lens L2, the eleventh lens L11, the third lens L3, the fourth lens L4, the fifth lens L5, the diaphragm S, the sixth lens L6, the seventh lens L7, the eighth lens L8, the twelfth lens L12, the ninth lens L9, the tenth lens L10, the prism P, and the protective glass CG in sequence from the zoom-in side to the zoom-out side. The refractive powers of twelve lenses are negative, positive, negative, negative, negative, positive, positive, negative, positive, positive, positive, and positive in sequence from the zoom-in side to the zoom-out side.

The relevant parameters of the elements are shown in Table 1.

[Table 1]

|  | Surface | Radius of curvature (mm) | Thickness/on-axis distance (mm) |
|---|---|---|---|
| First lens L1 | 1 | 42.02 | 1.61 |
|  | 2 | 22.78 | 1.92 |
| Second lens L2 | 3 | 24.50 | 5.61 |
|  | 4 | 128.30 | 0.20 |
| Eleventh lens L11 | 5 | 21.11 | 5.18 |
|  | 6 | 8.90 | 3.26 |
| Third lens L3 | 7 | 23.92 | 1.50 |
|  | 8 | 8.92 | 4.09 |
| Fourth lens L4 | 9 | -34.34 | 3.49 |
| Fifth lens L5 | 10 | 12.28 | 6.00 |
|  | 11 | -44.06 | 2.06 |
| Diaphragm S | 12 | ∞ | 5.82 |
| Sixth lens L6 | 13 | -30.40 | 3.28 |
| Seventh lens L7 | 14 | -8.35 | 1.50 |
| Eighth lens L8 | 15 | 39.41 | 4.62 |
|  | 16 | -19.34 | 0.90 |
| Twelfth lens L12 | 17 | -77.62 | 2.67 |
|  | 18 | -33.93 | 0.20 |
| Ninth lens L9 | 19 | 180.14 | 3.42 |
|  | 20 | -44.69 | 0.20 |
| Tenth lens L10 | 21 | 33.92 | 5.03 |
|  | 22 | -62.45 | 11.24 |

(continued)

|  | Surface | Radius of curvature (mm) | Thickness/on-axis distance (mm) |
|---|---|---|---|
| Prism P | 23 | ∞ | 16 |
|  | 24 | ∞ | 0.8 |
| Protective glass CG | 25 | ∞ | 1.1 |
|  | 26 | ∞ | 0.3 |

The surfaces 1 to 26 are arranged in sequence from the zoom-in side to the zoom-out side.

Embodiment 1 provides the large aperture projection lens with the maximum aperture of 27.6 mm, the back focal length BFL of 23 mm, the $L_{MAX}$/Fno of 13.8 mm, and the EFL/Fno of 8 mm. The structure of the lens is precise, so that the compact imaging lens with the low cost and the small volume is achieved. The present application is based on the principle of optical imaging, and the repeated optical optimization is carried out on the radius of curvature, material, thickness, air spacing, and two cemented lenses of the lenses of the projection lens using the optical design software, so as to achieve the objectives of small aberration, high resolution, long rear focus, small total length, simple structure, high mass productivity, and convenient mass production.

Embodiment 2

Referring to Fig. 2, the projection lens of Embodiment 2 includes the first lens L1, the second lens L2, the eleventh lens L11, the third lens L3, the fourth lens L4, the fifth lens L5, the diaphragm S, the sixth lens L6, the seventh lens L7, the eighth lens L8, the twelfth lens L12, the ninth lens L9, the tenth lens L10, the prism P, and the protective glass CG in sequence from the zoom-in side to the zoom-out side. The refractive powers of twelve lenses are negative, positive, negative, negative, negative, positive, positive, negative, positive, positive, positive, and positive in sequence from the zoom-in side to the zoom-out side.

The relevant parameters of the elements are shown in Table 2.

[Table 2]

|  | Surface | Radius of curvature (mm) | Thickness/on-axis distance (mm) |
|---|---|---|---|
| First lens L1 | 1 | 58.00 | 1.65 |
|  | 2 | 21.02 | 1.65 |
| Second lens L2 | 3 | 22.19 | 6.16 |
|  | 4 | 199.18 | 0.20 |
| Eleventh lens L11 | 5 | 20.99 | 3.40 |
|  | 6 | 11.11 | 3.00 |
| Third lens L3 | 7 | 18.39 | 1.50 |
|  | 8 | 7.61 | 4.10 |
| Fourth lens L4 | 9 | -34.17 | 6.00 |
| Fifth lens L5 | 10 | 11.73 | 6.00 |
|  | 11 | -59.01 | 1.46 |
| Diaphragm S | 12 | ∞ | 5.95 |
| Sixth lens L6 | 13 | -28.13 | 3.42 |
| Seventh lens L7 | 14 | -9.19 | 1.97 |
| Eighth lens L8 | 15 | 39.80 | 4.87 |
|  | 16 | -13.17 | 0.20 |
| Twelfth lens L12 | 17 | -111.46 | 2.87 |
|  | 18 | -34.29 | 0.20 |
| Ninth lens L9 | 19 | 204.77 | 3.07 |

(continued)

| | Surface | Radius of curvature (mm) | Thickness/on-axis distance (mm) |
|---|---|---|---|
| | 20 | -62.98 | 0.20 |
| Tenth lens L10 | 21 | 37.63 | 5.42 |
| | 22 | -66.33 | 10.51 |
| Prism P | 23 | ∞ | 16 |
| | 24 | ∞ | 0.8 |
| Protective glass CG | 25 | ∞ | 1.1 |
| | 26 | ∞ | 0.3 |

The surfaces 1 to 26 are arranged in sequence from the zoom-in side to the zoom-out side.

Embodiment 2 provides the large aperture projection lens with the maximum aperture diameter of 33.4 mm, the back focal length BFL of 24 mm, the $L_{MAX}$/Fno of 16.7 mm, and the EFL/Fno of 7.5 mm. The structure of the lens is precise, so that the compact imaging lens with the low cost and the small volume is achieved. The present application is based on the principle of optical imaging, and the repeated optical optimization is carried out on the radius of curvature, material, thickness, air spacing, and two cemented lenses of the lenses of the projection lens using the optical design software, so as to achieve the objectives of small aberration, high resolution, long rear focus, small total length, simple structure, high mass productivity, and convenient mass production.

Embodiment 3

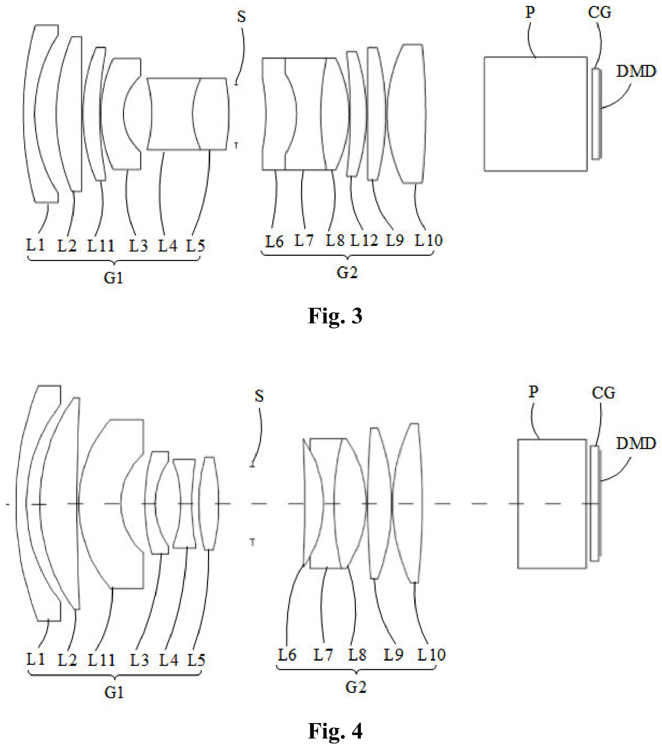

Referring to Fig. 3, the projection lens of Embodiment 3 includes the first lens L1, the second lens L2, the eleventh lens L11, the third lens L3, the fourth lens L4, the fifth lens L5, the diaphragm S, the sixth lens L6, the seventh lens L7, the eighth lens L8, the twelfth lens L12, the ninth lens L9, the tenth lens L10, the prism P, and the protective glass CG in sequence from the zoom-in side to the zoom-out side. The refractive powers of twelve lenses are negative, positive, positive, negative, negative, positive, positive, negative, positive, positive, positive, and positive in sequence from the zoom-in side to the zoom-out side.

Embodiment 3 differs from Embodiment 1 and Embodiment 2 in that the eleventh lenses L11 in Embodiment 1 and Embodiment 2 are the meniscus negative lens, and the eleventh lens L11 in Embodiment 3 is the meniscus positive lens. In addition, the specific parameters of the projection lens in Embodiment 3 are different from the specific parameters of the projection lens in Embodiment 1 and Embodiment 2.

The relevant parameters of the elements are shown in Table 3.

[Table 3]

| | Surface | Radius of curvature (mm) | Thickness/on-axis distance (mm) |
|---|---|---|---|
| First lens L1 | 1 | 51.96 | 1.78 |
| | 2 | 22.74 | 3.33 |
| Second lens L2 | 3 | 30.63 | 3.98 |
| | 4 | ∞ | 0.20 |
| Eleventh lens L11 | 5 | 27.58 | 2.59 |
| | 6 | 49.68 | 0.20 |
| Third lens L3 | 7 | 20.39 | 3.52 |
| | 8 | 7.85 | 4.40 |
| Fourth lens L4 | 9 | -21.75 | 6.34 |
| Fifth lens L5 | 10 | 15.37 | 5.67 |
| | 11 | -30.77 | 1.12 |
| Diaphragm S | 12 | ∞ | 4.65 |
| Sixth lens L6 | 13 | -33.14 | 4.78 |

(continued)

|  | Surface | Radius of curvature (mm) | Thickness/on-axis distance (mm) |
|---|---|---|---|
| Seventh lens L7 | 14 | -11.98 | 3.77 |
| Eighth lens L8 | 15 | 49.94 | 4.37 |
|  | 16 | -10.33 | 0.20 |
| Twelfth lens L12 | 17 | -79.98 | 2.51 |
|  | 18 | -31.26 | 0.20 |
| Ninth lens L9 | 19 | ∞ | 2.81 |
|  | 20 | -41.90 | 0.20 |
| Tenth lens L10 | 21 | 24.18 | 6.00 |
|  | 22 | -159.91 | 9.15 |
| Prism P | 23 | ∞ | 16 |
|  | 24 | ∞ | 0.8 |
| Protective glass CG | 25 | ∞ | 1.1 |
|  | 26 | ∞ | 0.3 |

The surfaces 1 to 26 are arranged in sequence from the zoom-in side to the zoom-out side.

Embodiment 3 provides the large aperture projection lens with the maximum aperture diameter of 33.4 mm, the back focal length BFL of 22 mm, the $L_{MAX}$/Fno of 16.7 mm, and the EFL/Fno of 6.7 mm. The structure of the lens is precise, so that the compact imaging lens with the low cost and the small volume is achieved. The present application is based on the principle of optical imaging, and the repeated optical optimization is carried out on the radius of curvature, material, thickness, air spacing, and two cemented lenses of the lenses of the projection lens using the optical design software, so as to achieve the objectives of small aberration, high resolution, long rear focus, small total length, simple structure, high mass productivity, and convenient mass production.

Embodiment 4

Referring to Fig. 4, the projection lens of Embodiment 4 includes the first lens L1, the second lens L2, the eleventh lens L11, the third lens L3, the fourth lens L4, the fifth lens L5, the diaphragm S, the sixth lens L6, the seventh lens L7, the eighth lens L8, the ninth lens L9, the tenth lens L10, the prism P, and the protective glass CG in sequence from the zoom-in side to the zoom-out side.

Embodiment 4 differs from Embodiments 1 to 3 in that the projection lens has a 12-lens structure in Embodiments 1 to 3. In Embodiment 4, the projection lens has an 11-lens structure, and the refractive powers of the lenses are negative, positive, negative, negative, negative, positive, positive, negative, positive, positive, and positive in sequence from the zoom-in side to the zoom-out side. The fourth lens L4 and the fifth lens L5 may be uncemented. In addition, the specific parameters of the projection lens in Embodiment 4 are different from the specific parameters of the projection lens in Embodiment 1 to 3.

The present application may be implemented in other specific forms without departing from the inventive concept and essential features. For example, the algorithms described in particular embodiments may be modified without the system architecture departing from the basic inventive concept of the present application. Accordingly, these embodiments are to be seen as examples but not limitations in all respects, the scope of the present application is defined by the appended claims rather than the above description, and all changes falling within the meaning of the claims and the scope of the equivalents thereof are thus included in the scope of the present application.

**Claims**

1.   A projection lens comprising a first lens group (G1) having a negative refractive power, a diaphragm (S), and a second lens group (G2) having a positive refractive power in sequence along an optical axis from a zoom-in side to a zoom-out side,

wherein the first lens group comprises a first lens (L1), a second lens (L2), a third lens (L3), a fourth lens (L4), and a fifth lens (L5) which are disposed in sequence along the optical axis from the zoom-in side to the zoom-out side, the first lens having a negative refractive power, the second lens having a positive refractive power, the third lens having a negative refractive power, the fourth lens having a negative refractive power, and the fifth lens having a positive refractive power;

the second lens group comprises a sixth lens (L6), a seventh lens (L7), an eighth lens (L8), a ninth lens (L9), and a tenth lens (L10) which are disposed in sequence along the optical axis from the zoom-in side to the zoom-out side, the sixth lens having a positive refractive power, the seventh lens having a negative refractive power, the eighth lens having a positive refractive power, the ninth lens having a positive refractive power, and the tenth lens having a positive refractive power;

a focal length of the projection lens is EFL, a f-number of the projection lens is Fno, an outer diameter of a largest one of the lenses of the projection lens is $L_{MAX}$, and the projection lens satisfying at least one of following conditions:

$$8 \text{ mm} \leq L_{MAX}/Fno \leq 30 \text{ mm};$$

$$2 \text{ mm} \leq EFL/Fno \leq 16 \text{ mm};$$

or

each of the lenses of the projection lens being an all-glass spherical lens.

2. The projection lens according to claim 1, wherein the first lens group (G1) further comprises an eleventh lens (L11), the eleventh lens is disposed between the second lens (L2) and the third lens (L3), the eleventh lens has a negative refractive power, or the eleventh lens has a positive refractive power; and/or

the second lens group (G2) further comprises a twelfth lens (L12), the twelfth lens is disposed between the eighth lens (L8) and the ninth lens (L9), and the twelfth lens has a positive refractive power.

3. The projection lens according to claim 2, wherein

the first lens (L1) is a plastic aspheric lens; and/or
at least one of the ninth lens (L9), the tenth lens (L10), or the twelfth lens (L12) is a glass aspheric lens.

4. The projection lens according to claim 1, wherein the fourth lens (L4) and the fifth lens (L5) form a cemented doublet-lens set having a positive refractive power; and/or

the sixth lens (L6), the seventh lens (L7), and the eighth lens (L8) form a cemented triplet-lens set having a negative refractive power.

5. The projection lens according to claim 1, wherein the fourth lens (L4) is a biconcave negative lens, and the fifth lens (L5) is a biconvex positive lens; and/or

the sixth lens (L6) is a biconvex positive lens or a meniscus positive lens, the seventh lens (L7) is a biconcave negative lens, and the eighth lens (L8) is a biconvex positive lens.

6. The projection lens according to claim 4, wherein an absolute value of a difference between a refractive index of the fourth lens (L4) and a refractive index of the fifth lens (L5) is greater than 0.2; and/or

an absolute value of a difference between refractive indexes of any adjacent two of the sixth lens (L6), the seventh lens (L7), and the eighth lens (L8) is greater than 0.2.

7. The projection lens according to claim 1, wherein a back focal length of the projection lens is BFL, a total optical length of the projection lens is TTL, an image plane height of the projection lens is H, and at least one of following conditions is satisfied:

$$0.2 \leq BFL/EFL \leq 3;$$

$$BFL/TTL \geq 0.1;$$

$$5 \leq TTL/H \leq 30;$$

or

$$1 \le EFL/H \le 3.$$

8. The projection lens according to any one of claims 1 to 7, wherein a focal length of the first lens group (G1) is $EFL_{ZOOM1}$, a focal length of the second lens group (G2) is $EFL_{ZOOM2}$, and following conditions are satisfied:

$$-100.0 < EFL_{ZOOM1}/EFL < -20.0;$$

and

$$0.3 < EFL_{ZOOM2}/EFL < 2.6.$$

9. The projection lens according to any one of claims 1 to 7, wherein the back focal length of the projection lens is BFL, the total optical length of the projection lens is TTL, and the projection lens satisfies at least one of following conditions:

$$9 \text{ mm} \le EFL \le 20 \text{ mm};$$

$$TTL \le 180 \text{ mm};$$

$$BFL \ge 20 \text{ mm};$$

$$1.5 \le Fno \le 3;$$

or
a diameter of each of the lenses is not greater than 60 mm.

10. The projection lens according to any one of claims 1 to 7, wherein at least two lenses of the first lens group (G1) each have a refractive index greater than 1.8; and/or

at least two lenses of the second lens group (G2) each have a refractive index greater than 1.8; and/or
the second lens group comprises X lenses whose ratio of a refractive index temperature coefficient to a focal length is a negative value, and a following condition is satisfied: $2 \le X \le 4$.

11. A projection system comprising the projection lens according to any one of claims 1 to 10.

12. A projection apparatus comprising a projection lens according to any one of claims 1 to 10 or a projection system according to claim 11.

**Fig. 1**

**Fig. 2**

**Fig. 3**

**Fig. 4**

Europäisches
Patentamt
European
Patent Office
Office européen
des brevets

**EUROPEAN SEARCH REPORT**

**Application Number**

EP 25 21 5356

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2017 058511 A (KONICA MINOLTA INC) 23 March 2017 (2017-03-23) * paragraph [0113]; figure 1 * | 1-3,7-12 | INV. G02B9/64 G02B13/16 G02B15/14 |
| X | JP 2017 173588 A (KONICA MINOLTA INC) 28 September 2017 (2017-09-28) * figures 1-4 * | 1-3,7-12 | |
| X | JP 2010 128480 A (FUJINON CORP) 10 June 2010 (2010-06-10) * figures 1-11 * | 1-12 | |
| X | JP 5 701970 B2 (PATENT) 15 April 2015 (2015-04-15) * figure 2a * | 1-12 | |
| X | JP 2023 081511 A (SEIKO EPSON CORP) 13 June 2023 (2023-06-13) * figure 2 * | 1-12 | |
| X | CN 115 469 441 A (KONICA MINOLTA INC) 13 December 2022 (2022-12-13) * figures 1-4 * | 1-3,7-12 | **TECHNICAL FIELDS SEARCHED (IPC)** G02B |
| A | JP 5 887175 B2 (RICOH OPTICAL IND CO) 16 March 2016 (2016-03-16) * the whole document * | 1-12 | |
| A | CN 219 642 072 U (YIBIN JIMI PHOTOELECTRIC CO LTD) 5 September 2023 (2023-09-05) * the whole document * | 1-12 | |

The present search report has been drawn up for all claims

| Place of search | Date of completion of the search | Examiner |
|---|---|---|
| Munich | 13 April 2026 | Daffner, Michael |

EPO FORM 1503 03.82 (P04C01)

## ANNEX TO THE EUROPEAN SEARCH REPORT
## ON EUROPEAN PATENT APPLICATION NO.

EP 25 21 5356

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2026

| Patent document cited in search report | | | Publication date | Patent family member(s) | | | Publication date |
|---|---|---|---|---|---|---|---|
| JP | 2017058511 | A | 23-03-2017 | JP | 6485302 | B2 | 20-03-2019 |
| | | | | JP | 2017058511 | A | 23-03-2017 |
| | | | | US | 2017075094 | A1 | 16-03-2017 |
| JP | 2017173588 | A | 28-09-2017 | JP | 6658185 | B2 | 04-03-2020 |
| | | | | JP | 2017173588 | A | 28-09-2017 |
| | | | | US | 2017276916 | A1 | 28-09-2017 |
| JP | 2010128480 | A | 10-06-2010 | JP | 5363084 | B2 | 11-12-2013 |
| | | | | JP | 2010128480 | A | 10-06-2010 |
| JP | 5701970 | B2 | 15-04-2015 | JP | 5701970 | B2 | 15-04-2015 |
| | | | | JP | WO2012114756 | A1 | 07-07-2014 |
| | | | | US | 2013314800 | A1 | 28-11-2013 |
| | | | | WO | 2012114756 | A1 | 30-08-2012 |
| JP | 2023081511 | A | 13-06-2023 | JP | 7694363 | B2 | 18-06-2025 |
| | | | | JP | 2023081511 | A | 13-06-2023 |
| | | | | US | 2023168476 | A1 | 01-06-2023 |
| CN | 115469441 | A | 13-12-2022 | CN | 115469441 | A | 13-12-2022 |
| | | | | JP | 7661797 | B2 | 15-04-2025 |
| | | | | JP | 2022189472 | A | 22-12-2022 |
| | | | | US | 2022397748 | A1 | 15-12-2022 |
| JP | 5887175 | B2 | 16-03-2016 | JP | 5887175 | B2 | 16-03-2016 |
| | | | | JP | 2013200454 | A | 03-10-2013 |
| CN | 219642072 | U | 05-09-2023 | NONE | | | |

EPO FORM P0459